# FASCICULE DE BREVET EUROPEEN

(11) **EP 1 157 255 B1**
(45) Date de publication et mention de la délivrance du brevet: **27.12.2006**
(21) Numéro de dépôt: 00903767.2
(22) Date de dépôt: 09.02.2000
(51) Int. Cl.: G01D 5/14, G01D 5/16, G01B 7/30

(54) **CAPTEUR DE POSITION A SONDE MAGNETO-SENSIBLE**
POSITIONSMESSEINRICHTUNG MIT MAGNETO-ELEKTRISCHER MESSONDE
POSITION SENSOR WITH MAGNETO-SENSITIVE PROBE

(30) Priorité: 03.03.1999 FR 9902644
(43) Date de publication de la demande: 28.11.2001
(73) Titulaire: MMT S.A., 1700 Fribourg (CH)
(72) Inventeur: GANDEL, Pierre, F-25660 Montfaucon (FR); FRACHON, Didier, F-25000 Besançon (FR)
(74) Mandataire: Breese, Pierre
(86) Numéro de dépôt international: PCT/FR2000/000312
(87) Numéro de publication internationale: WO 2000/052425

(56) Documents cités:
- WO-A-98/55828
- PATENT ABSTRACTS OF JAPAN vol. 012, no. 233 (P-724), 5 juillet 1988 (1988-07-05) & JP 63 026532 A (HONDA MOTOR CO LTD;OTHERS: 01), 4 février 1988 (1988-02-04)

## Description

La présente invention concerne le domaine des capteurs magnétiques de position sans contact à sonde magnéto-sensible et à aimant permanent.

On connaît dans l'art antérieur des capteurs de position mettant en oeuvre des sondes de Hall détectant le flux magnétique généré par le déplacement relatif d'un aimant permanent par rapport à une sonde de Hall.

En particulier, le brevet français n°2624966 décrit un codeur pour une roue d'impression comprenant un détecteur linéaire à effet Hall et un aimant permanent montés dans un arbre en métal non ferreux présentant une bague formant une spirale conductrice de flux moulée dans la roue et encerclant l'arbre. La position angulaire de la roue d'impression est déterminée en valeur absolue par l'amplitude du signal par rapport au point de transition de la spirale. Le capteur ainsi réalisé ne présente pas un signal réellement linéaire. Pour remédier à ce défaut de linéarité, on a proposé dans l'art antérieur de numériser le signal délivré par la sonde de Hall et de traiter le signal par des moyens informatiques.

On a également proposé dans l'art antérieur de remédier au défaut de linéarité des capteurs magnétiques de position par des géométries complexes. Ces solutions sont techniquement difficiles à réaliser pour des capteurs produits industriellement en grandes séries. Le coût de fabrication est de ce fait excessif dans de nombreuses applications.

On a également proposé dans l'état de la technique des capteurs avec une partie mobile formée par une culasse ferromagnétique sur lequel est directement fixé un aimant permanent, de largeur angulaire supérieure à 180°, la partie complémentaire étant réalisée soit par un matériau ferromagnétique, soit par un aimant permanent de polarité inversée, soit par de l'air. Une telle solution est proposée dans la demande de brevet FR 2739444. La largeur angulaire de l'aimant, supérieure à 180°, impose un volume d'aimant important qui est surdimensionné pour la mesure de faibles courses.

On a encore proposé des solutions avec deux aimants permanents de polarité alternée et/ou plusieurs sondes de Hall. A titre d'exemple, de telles solutions sont proposées dans les demandes de brevet français FR2670286 et FR2715726, ainsi que dans la demande de brevet japonaise JP63026532. Ces structures utilisent des aimants multipolaires ou des assemblages de plusieurs aimants en sens alterné, ce qui interdit l'aimantation après assemblage et oblige la manipulation d'aimants de haute énergie au moment de l'assemblage des capteurs. Une telle manipulation est délicate car les aimants de haute énergie peuvent introduire des particules, par exemple des copeaux métalliques, dans les capteurs au moment de leur mise en place. Pour éviter cet inconvénient, il est connu d'encapsuler les aimants, solution coûteuse qui présente l'inconvénient d'accroître encore le prix de revient des capteurs.

On connaît encore dans l'art antérieur la demande de brevet international WO98/55828 de la demanderesse, qui concerne un capteur magnétique de position pour la délivrance d'un signal électrique proportionnel à la position, constitué par une partie mobile présentant au moins un aimant permanent mince (1) mobile dans un entrefer principal. L'entrefer est défini par deux parties ferromagnétiques définissant entre-elles un entrefer secondaire comportant un capteur magnétosensible. La partie mobile est agencée de manière à ce que la pénétration de la partie aimantée dans l'entrefer principal soit partielle sur une partie de la course utile de façon à ce que le capteur magnétosensible délivre un signal proportionnel au degré d'engagement des parties aimantées dans l'entrefer principal (7).

Le brevet français FR2691534 décrit un capteur de position linéaire comportant un seul aimant permanent bipolaire mobile à l'intérieur d'un entrefer principal mince délimité par deux parties statoriques. Ce capteur nécessite un système de guidage pour le déplacement de l'aimant permanent. Le volume d'aimant nécessaire et la linéarité ne sont pas optimum. De ce fait, dans certaines applications exigeantes, ce capteur présente un coût et des caractéristiques jugées non suffisantes.

Les capteurs de l'art antérieur mettent en oeuvre des aimants permanents généralement en terre rare de type Néodyme-Fer-Bore ou Samarium-Cobalt. Ces aimants performants sont encore relativement chers. Les structures de l'art antérieur présentent de ce fait un coût relativement élevé.

La linéarité du signal fourni par le capteur en fonction de la position est une caractéristique fondamentale qui détermine la qualité d'un capteur de position. Dans le cas idéal, cette fonction est une droite.

Les capteurs cités précédemment utilisent tous deux transformations :
- La première transformation est réalisée par le circuit ferromagnétique. Celui-ci permet de fournir au composant de mesure magnéto-sensible, par exemple une sonde de Hall, une induction magnétique qui varie en fonction de la position. La première transformation est alors déterminée par la caractéristique induction (position).
- La deuxième transformation est réalisée par l'élément de mesure inséré dans le circuit magnétique. Il fournit un signal de sortie, généralement sous la forme d'une tension, qui varie avec l'amplitude de l'induction dans laquelle il est placé. La deuxième transformation est alors déterminée par la caractéristique tension (induction).

Pour obtenir un capteur avec une très grande linéarité, il est souhaitable de réaliser deux transformations linéaires avec la plus grande linéarité possible.

Si l'une des transformations présente une linéarité plus ou moins bonne, il faut compenser son erreur de linéarité avec l'autre transformation ou à l'aide de moyens électroniques et/ou informatiques, ce qui est coûteux et peu élégant.

La linéarité de la seconde tranformation est imposée par la qualité de l'élément de mesure utilisé. Actuellement, on peut trouver des sondes de Hall commercialisées avec une erreur de linéarité sur la caractéristique (signal de sortie/induction) inférieure à ±0.2%.

Une très grande linéarité de la première tranformation peut être obtenue en réalisant judicieusement le circuit magnétique, c'est l'objet de la présente invention.

Une autre caractéristique importante d'un capteur de position est l'amplitude du rapport signal/bruit. Pour réaliser un capteur magnétique de position de bonne qualité, il faut en pratique réaliser un circuit magnétique fournissant une variation d'induction ΔB en fonction de la position suffisamment importante afin d'obtenir un rapport signal/bruit élevé. Ceci détermine, en partie, le volume et la qualité de l'aimant à utiliser.

Notons qu'il est déconseillé d'utiliser une variation d'induction trop importante. En effet, cela traduit un surcoût en aimant. D'autre part, pour des valeurs d'inductions élevées, la linéarité d'une sonde de Hall (deuxième transformation) se détériore.

L'objet de la présente invention est de proposer un capteur de position magnétique sans contact amélioré, de moindre coût et de grande fiabilité, présentant une grande linéarité avec un volume d'aimant optimal.

A cet effet, l'invention concerne dans son acception la plus générale un capteur magnétique de position, conforme à la revendication 1. Les modes particuliers de réalisation de l'invention sont définis dans les revendications dépendantes 2 à 17.

Selon une première variante, le ou les aimants sont partiellement encastrés dans une cavité d'une culasse ferromagnétique mobile, du côté du stator, à une profondeur e telle que 0.1L < e < 0.9L, L étant l'épaisseur de i'aimant dans la direction de l'aimantation.

Selon une deuxième variante, le ou les aimants sont juxtaposés à au moins une pièce ferromagnétique mobile d'épaisseur e, dans la direction de l'aimantation d'un aimant, telle que 0.1L < e < 0.9L, le ou les aimants présentant une longueur dans la direction du déplacement 0x au moins égale à Xc,

Avantageusement, l'organe mobile présente un aimant partiellement encastré dans une cavité située sensiblement au milieu de la culasse ferromagnétique mobile, la cavité et l'aimant ayant une longueur dans la direction OX au moins égale à Xc, et de préférence égale Xc+F+2E', dans le cas d'un aimant de forme semi-annulaire cette longueur est mesurée sur le rayon moyen de l'aimant, F est la longueur de l'entrefer selon la direction OX dans lequel est placée la sonde, E' est compris entre e/4 et E, où E est la distance mesurée perpendiculairement à OX entre les pièces statoriques ferromagnétiques et le fond de la cavité.

Selon un mode de réalisation particulier, l'organe mobile présente une culasse ferromagnétique de longueur mesurée suivant OX au moins égale à 3Xc+F+6E'.

Avantageusement, les pièces ferromagnétiques statoriques présentent une longueur Xs mesurée suivant OX sensiblement égale à Xc+2E', dans le cas d'un capteur rotatif la longueur est mesurée sur le rayon moyen d'un aimant.

De préférence, la profondeur e d'une cavité de la culasse ferromagnétique mobile est déterminée de manière à réaliser un capteur de linéarité maximale, avec de préférence 0.3L<e<0.8L.

Selon une variante, la cavité dans une culasse ferromagnétique mobile est réalisée de manière à obtenir un rapport e/L aussi grand que possible, avec de préférence 0.5L < e < 0.9L, en conservant une faible erreur de linéarité, de préférence inférieure à 3%.

Selon un mode de réalisation préféré, l'épaisseur e, mesurée suivant la direction de l'aimantation d'un aimant, d'une pièce ferromagnétique mobile juxtaposée à un aimant permanent est déterminée de manière à réaliser un capteur de linéarité maximale, avec de préférence 0.3L<e<0.8L.

De préférence, l'épaisseur e, mesurée suivant la direction de l'aimantation d'un aimant, d'une pièce ferromagnétique mobile juxtaposée à un aimant permanent est réalisée de manière à obtenir un rapport e/L aussi grand que possible, avec de préférence 0.5L < e < 0.9L, en conservant une faible erreur de linéarité, de préférence inférieure à 3%.

Selon un mode de réalisation particulier, le rapport L/E est supérieur à 0.5 et de préférence supérieur ou égal à 0.75, où E est la distance mesurée perpendiculairement à OX entre les pièces statoriques (3, 4) ferromagnétiques et le fond de la cavité (6).

Avantageusement, le rapport Xs/E est supérieur à 5, et de préférence supérieur ou égal à 8.

Selon une variante, les pièces ferromagnétiques statoriques (3, 4), le ou les aimants et la ou les pièces ferromagnétiques mobiles (5) ont la même longueur Z mesurée suivant l'axe perpendiculaire à la direction de l'aimantation et à la direction déplacement OX, et de préférence supérieure ou égale à 3E.

Selon une autre variante, les parties respectivement fixes et mobiles sont échangées en partie respectivement mobiles et fixes.

Selon une variante de réalisation, la structure statorique est composée de quatre pièces ferromagnétiques parallélépipédiques (101, 102, 103, 104) définissant deux paires d'entrefers secondaires se croisant en un point médian (100). Chaque entrefer secondaire (105, 106) étant muni d'une sonde magnéto-sensible (107, 108, 200, 201).

Selon une variante, la partie mobile (110) peut se déplacer dans deux directions OX et OY et est composée d'une culasse ferromagnétique (111) dans laquelle est partiellement encastré un aimant permanent (109) polarisé dans la direction de l'entrefer principal, séparant les pièces statoriques de la culasse mobile.

Selon une variante, la partie mobile peut se déplacer dans deux directions OX et OY et est composée d'un aimant permanent polarisé dans la direction de l'entrefer principal, séparant les pièces statoriques de la culasse mobile, juxtaposé à au moins une pièce ferromagnétique mobile.

L'invention sera mieux comprise à la lecture de la description qui suit, se référant aux dessins annexés où :
- La figure 1 présente une vue partielle d'un capteur selon l'invention ;
- La figure 2 présente un exemple de réalisation d'un capteur magnétique de position angulaire sans contact, selon l'invention ;
- La figure 3 représente une courbe de non linéarité en fonction de la position ;
- La figure 4 présente une variante de réalisation.
- La figure 5 présente une autre variante d'un capteur magnétique de position angulaire selon l'invention ;
- La figure 6 présente une variante d'un capteur magnétique de position angulaire selon l'invention ;
- La figure 7 présente une variante de réalisation du capteur de la figure 6 ;
- La figure 8 présente une variante qui intégre deux capteurs élémentaires rotatifs selon l'invention ;
- La figure 9 présente une variante qui intégre deux capteurs élémentaires rotatifs ;
- Les figures 10 et 11 présentent des variantes de capteur avec une culasse rotorique annulaire ferromagnétique compotant un ou deux aimants permanents et avec deux aimants de forme semi-annulaire ;
- la figure 12 présente un capteur magnétique de position linéaire selon l'invention ;
- La figure 13 présente une vue en coupe d'une variante de réalisation d'un capteur de position linéaire ;
- La figure 14 présente une variante du capteur, selon la figure 12, avec deux aimants ;
- les figures 15 et 16 présentent respectivement une vue éclatée et une vue d'ensemble d'un capteur magnétique de position à deux degrés de liberté selon l'invention ;
- La figure 17 présente une variante d'un capteur de position linéaire ;
- La figure 18 présente une variante du capteur de position linéaire de la figure 17.

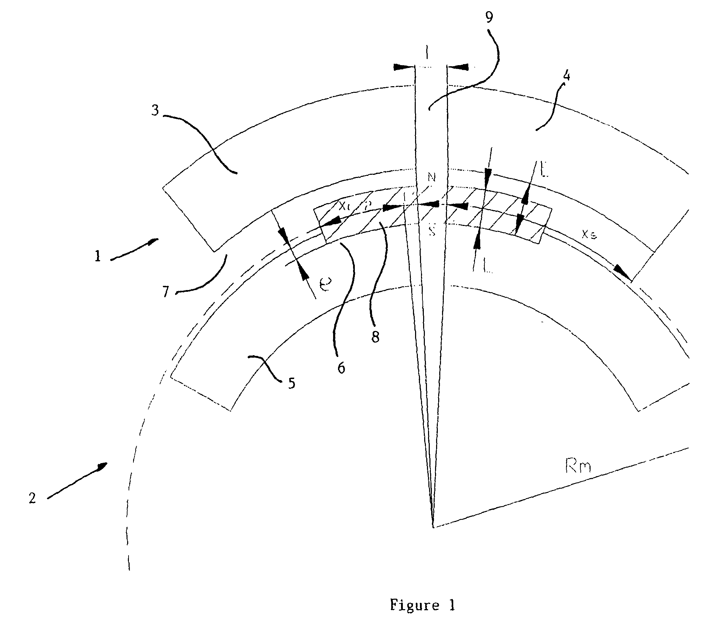

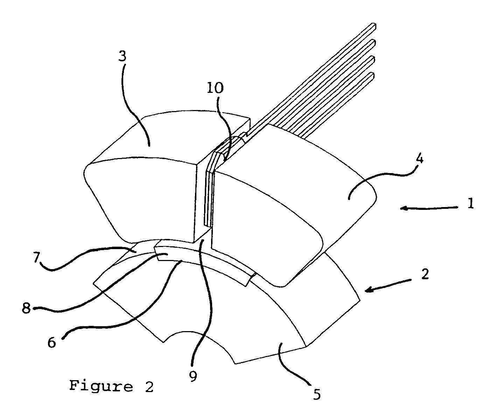

Les figures 1 et 2 présentent respectivement une vue schématique et une vue en perspective d'une première variante de réalisation, dans un configuration rotative.

Ce capteur comporte un stator fixe (1) et une partie mobile (2) dans la direction OX, avec une course utile Xc sur laquelle le signal fourni présente une grande linéarité.

Le stator comporte deux pièces statoriques (3, 4) en un matériau magnétique doux en forme de quartier annulaire. La partie mobile (2) présente une culasse en fer doux (5) de forme semi-annulaire. Les pièces statoriques (3, 4) et la culasse (5) définissent entre elles un entrefer principal (7). La culasse (5) présente une cavité (6) dans laquelle est logée un aimant (8) aimanté perpendiculairement à l'entrefer (7), en l'occurrence selon une direction radiale.

Le stator présente deux pièces ferromagnétiques (3, 4) espacées par un entrefer secondaire (9) de longueur F, dans lequel est placée une sonde magnéto-sensible (10). Les deux pièces statoriques (3, 4) sont réunies par des pièces non magnétiques, réalisées par exemple en laiton, et sont alignées dans une même surface cylindrique, avec pour axe, l'axe de rotation de la partie mobile.

La course Xc est la largeur de l'arc angulaire parcourue par la partie mobile sur le rayon moyen Rm de la partie aimantée. La course de l'aimant s'étend de ±Xc/2 par rapport au centre de l'entrefer secondaire, dans lequel est placée la sonde magnéto-sensible, perpendiculaire à l'entrefer principal.

La partie mobile (2) comporte une culasse (5) en matériau magnétique doux et un aimant (8) permanent partiellement encastré dans la culasse (5). L'aimant (8) est polarisé radialement, c'est à dire perpendiculairement à OX. La partie mobile (2) se déplace parallèlement aux pièces statoriques (3, 4), à une distance minimale constante Yo mesurée perpendiculairement à OX.

L'aimant (8) permanent est partiellement encastré dans une cavité située sensiblement au milieu de la culasse (5) mobile, du côté des pièces statoriques (3, 4), à une profondeur e telle que 0.1L < e < 0.9L, où L est l'épaisseur de l'aimant (8) dans le sens de la polarisation. La profondeur e est déterminée de manière à optimiser les caractéristiques du capteur.

L'aimant (8) permanent se déplace avec la culasse (5) parallèlement aux pièces statoriques (3, 4) à une distance minimale constante E-L, E étant la distance mesurée perpendiculairement à OX entre les pièces du stator et le fond de la cavité. La culasse (5) est située à une distance minimale du stator égale à Yo=E-e supérieure à E-L.

La largeur Xs des pièces statoriques (3, 4) mesurée sur le rayon moyen Rm de l'aimant (8) est supérieure ou égale à Xc, de préférence sensiblement égale à Xc+2E' pour obtenir un signal avec une grande linéarité sur toute la course Xc, où E' est compris entre e/4 et E.

De préférence, la cavité dans la culasse (5) mobile et l'aimant (8) ont une largeur, mesurée sur le rayon moyen Rm de l'aimant (8), supérieure ou égale à Xc+F, de préférence sensiblement égale à Xc+F+2E'.

Selon une variante avantageuse, la largeur de la culasse (5) mobile mesurée sur le rayon moyen Rm de l'aimant (8) est au moins égale à 3Xc+F+6E'.

Selon une variante avantageuse, le rapport L/E est supérieur ou égal à 0.5 et de préférence supérieur ou égal à 0.75.

Selon une variante avantageuse, le rapport Xs/E est relativement grand, de préférence supérieur à 8.

Selon une variante avantageuse, l'aimant (8), la culasse (5) mobile et les pièces statoriques (3, 4) ferromagnétiques ont la même longueur Z mesurée suivant l'axe perpendiculaire à la direction de l'aimantation et à la direction du déplacement OX, et de préférence supérieure ou égale à 3E.

Ces variantes avantageuses permettent de définir un capteur avec une géométrie optimale et un volume d'aimant (8) adapté à la plage de mesure souhaitée.

La sonde magnéto-sensible (10) peut être une sonde à effet Hall, une sonde magnétorésistive, un transistor magnétique, etc. Ce qui importe c'est que le signal fourni dépend le plus linéairement possible de l'induction magnétique dans lequel est placé cet élément.

L'aimant (8) permanent peut être de différents types, de préférence on utilisera un aimant (8) en Samarium-Cobalt ou NdFeB, mais aussi éventuellement un aimant (8) de type AlNiCo, ferrites, etc. Ce qui importe c'est qu'il ait une perméabilité réversible proche de 1, et de préférence inférieure à 1.2 afin d'obtenir une bonne linéarité du signal. On choisira, de préférence, un aimant (8) avec un faible coefficient de température.

Les parties ferromagnétiques statoriques et la culasse (5) mobile peuvent êtres réalisées en Fer-Nickel, Fer-Silicium, Fer pur, etc.

Il n'est pas nécessaire d'introduire une pièce de guidage pour l'aimant (8), puisqu'il est directement fixé sur la culasse (5) mobile. L'encastrement de l'aimant (8) dans la culasse (5) permet aussi de réduire la sensibilité du capteur à la qualité du collage de l'aimant (8) et facilite sa mise en place sur la culasse (5) lors de la mise en production.

La présente invention permet de minimiser le volume d'aimant (8) ou d'augmenter la variation d'induction ΔB, donc le rapport signal/bruit. L'invention permet également d'augmenter la linéarité du capteur.

A cet effet, l'invention concerne un capteur magnétique de position comportant une structure statorique, possédant au moins un entrefer, dans lequel est placée au moins une sonde magnéto-sensible (10), et une partie mobile (2) comportant au moins une culasse (5) ferromagnétique, caractérisé en ce que la partie mobile (2) comporte au moins un aimant (8) permanent, aimanté dans la direction de l'entrefer séparant le stator de la partie mobile (2), partiellement encastré dans une cavité prévue dans la culasse (5) mobile ferromagnétique.

La profondeur e de la cavité réalisée dans la culasse (5) mobile est choisie de façon judicieuse afin d'augmenter par rapport au cas sans cavité (e=0), avec un aimant (8) identique et le même encombrement extérieur, l'induction magnétique fournie par le circuit magnétique à la sonde magnéto-sensible (10), et/ou afin d'améliorer la linéarité du capteur le long de la course.

Contrairement à certaines structures de l'art antérieur qui utilisent un volume d'aimant, en forme de bague ou de disque, réparti sur 360°, quelle que soit la longueur de la course à mesurer, le capteur selon l'invention présente un ou des aimants avec des dimensions directement adaptées à la plage de mesure souhaitée. Cela permet de réduire de façon très appréciable le volume d'aimant (8) et par conséquent le coût du capteur, particulièrement dans le cas des capteurs destinés à la mesure de faibles courses.

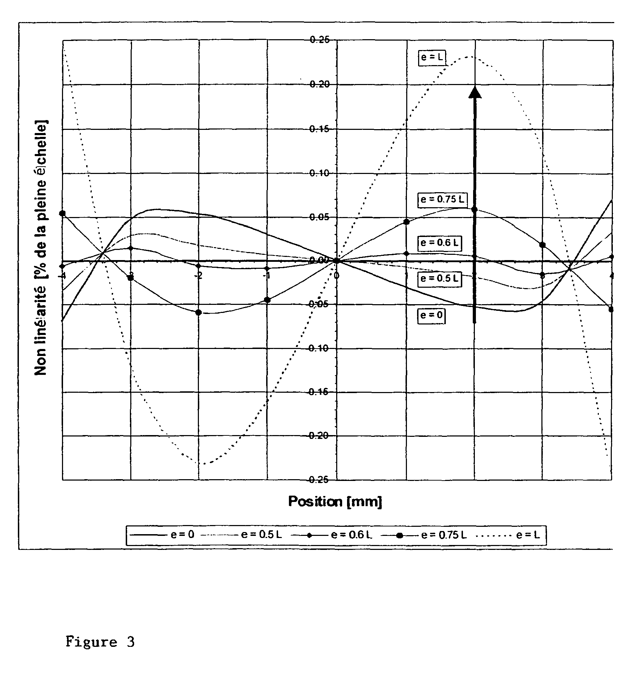

L'encastrement de l'aimant (8) permanent modifie la distribution et l'importance des flux de fuites, il permet alors d'intervenir sur la linéarité du capteur. On peut montrer que la linéarité varie en fonction de la profondeur de la cavité (6) dans laquelle est partiellement encastré l'aimant (8) permanent. La figure 3 montre l'évolution de l'erreur de linéarité (= non-linéarité) d'un capteur, obtenue le long de la course, en fonction de la profondeur de la cavité (6) e.

En traçant l'erreur de linéarité en fonction de la position, et en fonction de la profondeur de la cavité (6), on constate qu'il apparaît un changement de signe lorsque la profondeur varie entre 0 et L, où L est l'épaisseur de l'aimant (8) dans la direction de l'aimantation. Il existe donc un optimum pour lequel l'erreur de linéarité de la caractéristique induction / position devient sensiblement nulle.

Dans l'exemple de la figure 3, avec une cavité (6) de profondeur e=0,6L, nous obtenons une nette amélioration de la linéarité (non-linéarité plus faible) par rapport au cas sans cavité (6) (e=0).

Les cas particuliers, sans encastrement (e=0) ou avec encastrement total de l'aimant (8) (e = L), ne correspondent très généralement pas à un optimum de linéarité.

L'invention permet alors de réaliser un circuit magnétique fournissant à la sonde magnéto-sensible (10) une induction d'une très grande linéarité par rapport la position à mesurée.

L'induction fournie par le circuit magnétique dans la sonde magnéto-sensible (10) augmente strictement avec la hauteur e de l'encastrement. Pour augmenter la variation d'induction le long de la course, il faut alors réaliser une cavité (6) de profondeur aussi grande que possible, jusqu'à ce que l'on atteigne la limite de non-linéarité jugée satisfaisante pour l'application donnée.

La technique proposée par l'invention permet d'augmenter de manière appréciable, par rapport au cas sans encastrement (e = 0), sans pièce supplémentaire, sans modification de l'encombrement extérieur, et quasiment sans surcoût (très légèrement plus de fer), la variation d'induction ΔB, avec de plus, dans le cas d'un encastrement judicieusement choisi, une amélioration de la linéarité.

Avec un encastrant de l'aimant (8) permanent, nous pouvons conserver la même variation d'induction ΔB que sans encastrement (e=0) en réduisant le volume d'aimant ou en utilisant un aimant de moins bonne qualité, donc en réduisant le coût du capteur, tout en conservant le même encombrement extérieur.

Dans certaines applications où une très grande linéarité est souhaitée, nous privilégierons la recherche de l'encastrement optimum. Par contre, dans les applications où l'on peut tolérer des erreurs de mesures sensiblement plus importantes, nous utiliserons un encastrement relativement important, de préférence compris entre 0.4L et 0.9L, afin de privilégier l'augmentation de la variation d'induction ΔB ou la réduction du coût de l'aimant (8) (réduction du volume et/ou utilisation d'un aimant (8) de moins bonne qualité).

Le principe de l'invention consiste alors à optimiser la hauteur de l'encastrement, avec 0.1L<e<0.9L, afin d'apporter le meilleur compromis entre la linéarité et le volume d'aimant (8) nécessaire, pour remplir un cahier des charges donné, et réaliser ainsi un capteur de moindre coût.

L'encastrement de l'aimant (8) dans la culasse (5) permet de réduire la sensibilité du capteur à la qualité du collage de l'aimant (8) et facilite sa mise en place sur la culasse (5) lors de la mise en production. De plus, il n'est pas nécessaire d'introduire une pièce de guidage pour l'aimant (8), puisqu'il est directement fixé sur la culasse (5) mobile. La réalisation et la production d'un tel capteur est alors relativement simple et économique.

L'invention peut être appliquée à des capteurs de position linéaire et angulaire. Le principe est facilement transposable par l'Homme de métier à de nombreuses architectures de capteurs magnétiques, les exemples présentés dans cette demande de brevet ne sont pas exhaustifs.

La figure 2 présente un capteur magnétique de position angulaire sans contact, selon l'invention, dont le principe est basé sur le déplacement relatif d'un aimant (8) permanent par rapport à une sonde magnéto-sensible (10). Ce capteur comporte une structure statorique composée de deux pièces ferromagnétiques de forme semi-annulaire séparées par un entrefer de longueur F constante, dans lequel est placée une sonde magnéto-sensible (10). La partie mobile (2) comporte une culasse (5) ferromagnétique de forme semi-annulaire dans lequel est prévue une cavité (6) pour recevoir un aimant (8) permanent semi-annulaire aimanté radialement. La profondeur de la cavité (6) est choisie de manière à optimiser les caractéristiques du capteur pour l'application donnée.

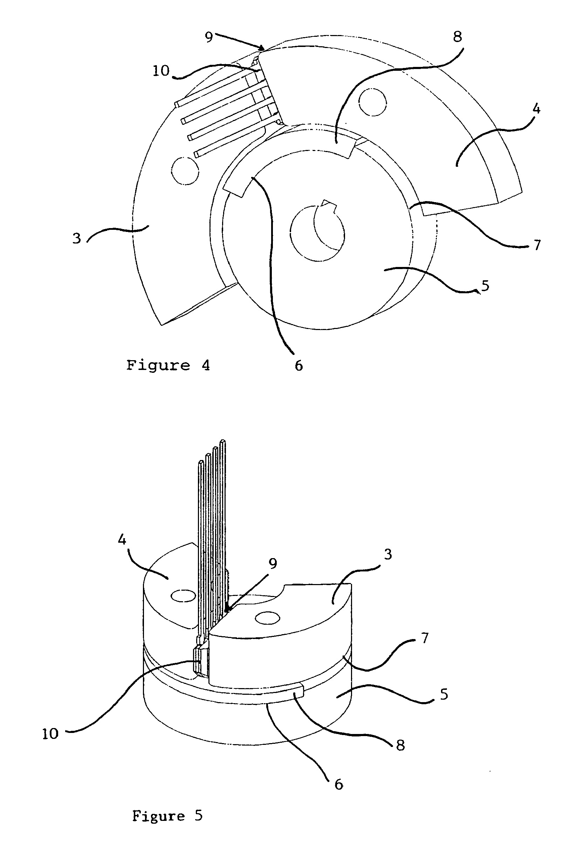

La figure 4 présente une variante de réalisation. La partie mobile (2) comporte une culasse (5) ferromagnétique de forme annulaire dans lequel est prévue une cavité (6) pour recevoir un aimant (8) permanent semi-annulaire aimanté radialement. La profondeur de la cavité (6) est choisie de manière à optimiser les caractéristiques du capteur pour l'application donnée.

La figure 5 présente un capteur magnétique de position angulaire selon l'invention. Ce capteur comporte une structure statorique (3, 4) composée de deux pièces ferromagnétiques de forme semi-annulaire séparées par un entrefer de longueur F constante, dans lequel est placée une sonde magnéto-sensible (10). La partie mobile (2) comporte une culasse (5) ferromagnétique de forme semi-annulaire dans lequel est prévue une cavité (6) pour recevoir un aimant (8) permanent semi-annulaire, aimanté axialement, parallèlement à l'axe de rotation. La profondeur de la cavité (6) est déterminée de manière à optimiser les caractéristiques du capteur.

Les dimensions préférées (largeur angulaire de l'aimant (8), largeur des pôles statoriques, etc.) permettant d'optimiser la géométrie du capteur peuvent être déduites sans difficulté de la variante décrite précédemment (figure 1 et 2).

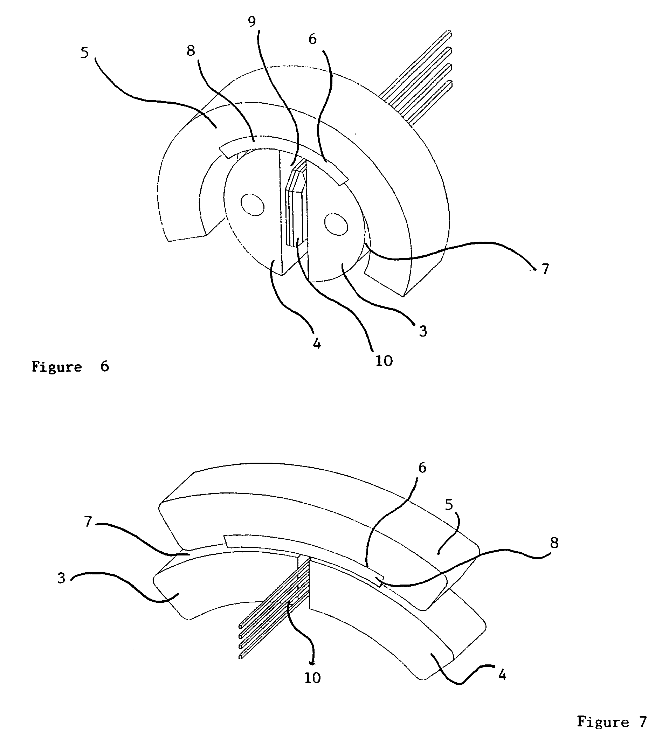

La figure 6 présente un capteur magnétique de position angulaire selon l'invention. Il comporte une structure statorique composée de deux pièces ferromagnétiques, en forme de portion de cylindre, séparées par un entrefer de longueur constante F, dans lequel est placée une sonde magnéto-sensible (10). La partie mobile (2), située à l'extérieur, comporte une culasse (5) ferromagnétique de forme semi-annulaire dans laquelle est prévue une cavité (6) pour recevoir un aimant (8) permanent semi-annulaire, aimanté radialement.

La figure 7 présente une variante de réalisation du capteur de la figure 6, avec des pièces satoriques, en forme de portion d'anneau, guidant le flux magnétique dans la sonde.

Sur la base des structures précédentes, il est possible de réaliser des capteurs à plusieurs sondes magnéto-sensibles (10), associé à un ou plusieurs aimants permanents partiellement encastrés, afin de réaliser une redondance et ainsi d'améliorer la fiabilité et la qualité du capteur.

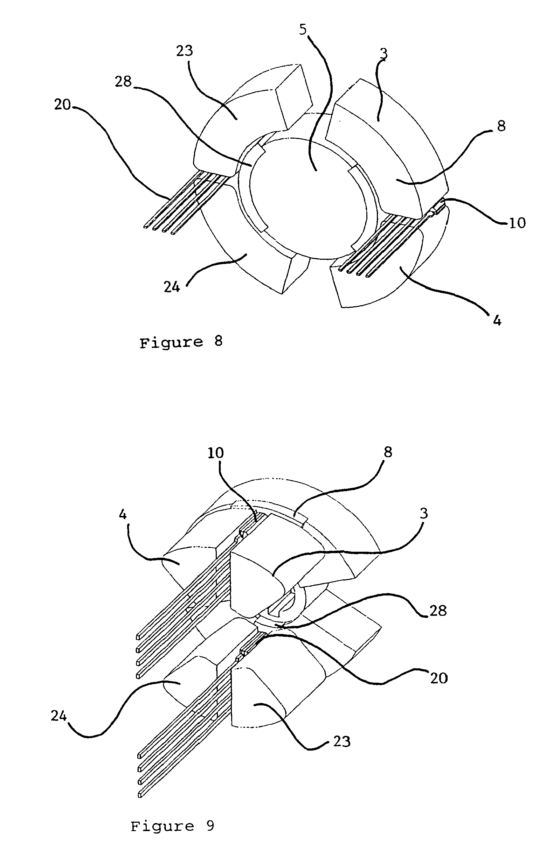

La figure 8 présente une variante qui intégre deux capteurs élémentaires rotatifs selon l'invention présentée à la figure 4. Ce capteur comporte deux sondes de Hall (10, 20), placées chacune entre deux parties ferromagnétiques statoriques (3, 4) et (23, 24). Le rotor comporte deux aimants (8, 28) de forme semi-annulaire, aimantés radialement, partiellement encastrés dans la culasse (5) rotorique ferromagnétique.

La figure 9 présente une variante qui intégre deux capteurs élémentaires rotatifs selon l'invention présentée à la figure 5. Ce capteur comporte deux sondes de Hall (10, 20) placées chacune entre deux parties ferromagnétiques statoriques (3, 4) et (23, 24). Le rotor comporte deux aimants (8, 28) de forme semi-annulaire aimantés axialement, dans la direction de l'axe de rotation, et partiellement encastrés dans une culasse (5) rotorique.

Dans le but de réaliser une protection contre les champs magnétiques parasites extérieurs qui pourraient perturber l'induction magnétique fournie à la sonde, il est possible dans certains cas de réaliser une culasse (5) rotorique extérieure fermée.

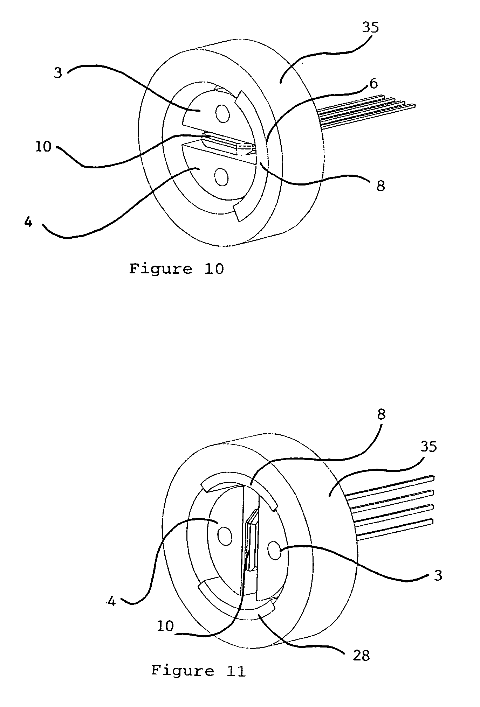

La figure 10 présente une variante avec une culasse (35) rotorique annulaire ferromagnétique. Cette culasse (35) joue le rôle d'écran contre les champs magnétiques extérieurs. La variante proposée utilise un aimant (8) de forme semi-annulaire, aimanté radialement, partiellement encastré dans la culasse (35) rotorique.

La figure 11 présente une variante du capteur présenté à la figure 10 avec deux aimants permanents (8, 28) de forme semi-annulaire, aimantés radialement, partiellement encastrés dans la culasse (35) rotorique ferromagnétique et diamétralement opposés.

L'invention peut être appliquée, de manière analogue, à des capteurs de position linéaire.

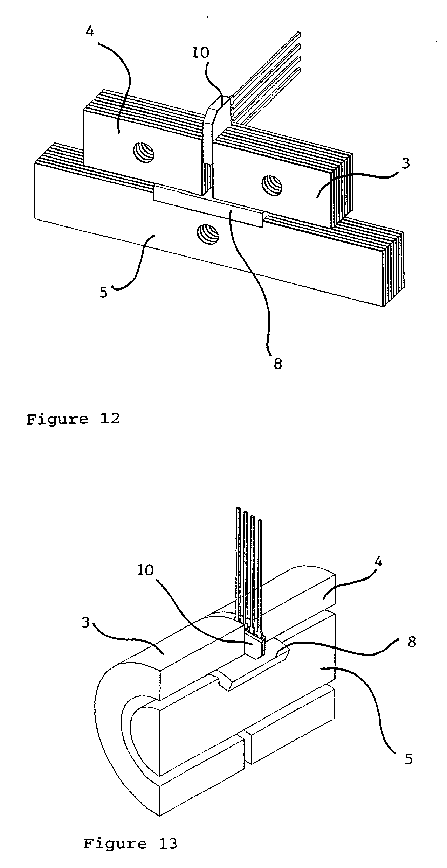

La figure 12 présente un capteur magnétique de position linéaire sans contact, selon l'invention, dont le principe est basé sur le déplacement relatif d'un aimant (8) permanent par rapport à une sonde magnéto-sensible (10). La structure de ce capteur peut être directement obtenue en « déroulant » le capteur de la figure 2. Le stator comporte une structure composée de deux pièces ferromagnétiques de forme parallélépipèdique séparées par un entrefer secondaire de longueur constante, dans lequel est placée une sonde magnéto-sensible (10). La partie mobile (2) comporte une culasse (5) ferromagnétique de forme parallélépipèdique dans lequel est prévue une cavité (6) pour recevoir un aimant (8) permanent parallélépipèdique. L'aimant (8) est polarisé dans la direction de l'entrefer principal, séparant les pièces statoriques (3, 4) de la partie mobile (2). La profondeur de la cavité (6) est déterminée de manière à optimiser les caractéristiques du capteur.

Les dimensions préférées (largeur de l'aimant (8), largeur des pôles statoriques, etc.) permettant d'optimiser la géométrie du capteur peuvent être déduites sans difficulté du cas rotatif décrit précédemment.

La figure 13 présente une vue en coupe d'une variante de réalisation d'un capteur de position linéaire. Le stator comporte une structure statorique composée de deux pièces ferromagnétiques de forme tubulaire séparées par un entrefer de longueur constante, dans lequel est placée une sonde magnéto-sensible (10). La partie mobile (2) comporte une culasse (5) ferromagnétique de forme cylindrique dans laquelle est prévue une cavité (6) pour recevoir un aimant (8) permanent semi-annulaire, aimanté radialement.

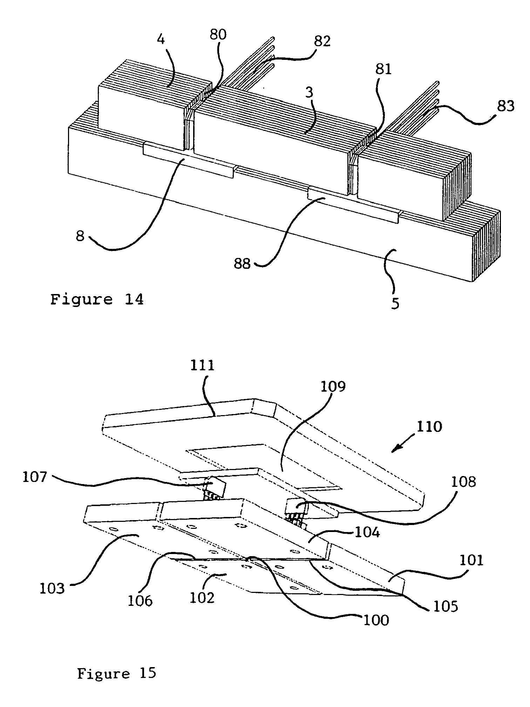

La figure 14 présente une variante du capteur, selon l'invention décrite à la figure 12, avec deux aimants permanents (8, 88) de forme parallèlipédique, partiellement encastrés dans la culasse (5) ferromagnétique mobile. Le stator présente deux entrefers (80, 81) permettant de loger chacun une sonde de Hall (82, 83).

Dans chacune des réalisations proposées, il est possible d'échanger la réalisation de la partie fixe et celle de la partie mobile.

Le principe de l'invention est également applicable à des capteurs magnétiques de position sans contact bidimensionnel, c'est-à-dire à deux degrés de liberté.

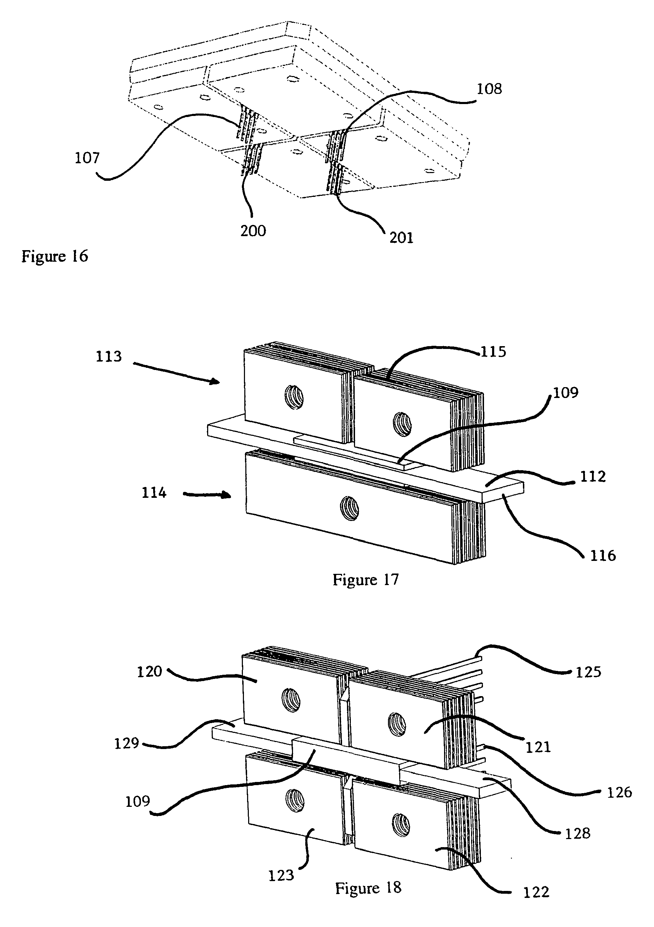

Les figures 15 et 16 présentent respectivement une vue éclatée et une vue d'ensemble d'un capteur magnétique de position à deux degrés de liberté selon l'invention. La structure statorique est composée de quatre pièces ferromagnétiques parallélépipèdiques (101, 102, 103, 104) définissant deux paires d'entrefers secondaires se croisant en un point médian (100). Chaque entrefer secondaire (105, 106) est muni d'une sonde magnéto-sensible (107, 108, 200, 201).

La partie mobile (110) peut se déplacer dans deux directions OX et OY. Elle est composée d'une culasse ferromagnétique (111) dans laquelle est partiellement encastré un aimant permanent (109). L'aimant (109) est polarisé dans la direction de l'entrefer principal, séparant les pièces statoriques de la culasse mobile, c'est à dire perpendiculairement aux degrés de liberté OX et OY.

Les sondes magnéto-sensibles (107, 108, 200, 201). délivrent des signaux que l'on peut combiner afin d'obtenir deux signaux indépendants, respectivement linéaires par rapport à un déplacement selon OX et selon OY. La profondeur de la cavité réalisée dans la culasse mobile est déterminée de manière à optimiser les caractéristiques du capteur, en intervenant sur la linéarité des signaux et sur la variation d'induction ΔB dans chacune des sondes (107, 108, 200, 201), de la même manière que dans les cas à un seul degré de liberté. Le principe de l'invention consiste à optimiser la hauteur de l'encastrement, afin d'apporter le meilleur compromis entre la linéarité et le volume d'aimant nécessaire, pour remplir un cahier des charges donné, et réaliser ainsi un capteur à deux degrés de liberté de moindre coût.

Il est possible de réaliser un capteur avec un aimant mobile à l'intérieur d'un entrefer, défini par des parties statoriques ferromagnétiques, et d'encastrer cet aimant ou de le juxtaposer à une ou plusieurs pièces ferromagnétiques mobiles. L'épaisseur e des pièces ferromagnétiques mobiles, dans la direction de l'aimantation, est déterminée de manière à optimiser les caractéristiques du capteur, avec 0.1<e<0.9L, comme décrit précédemment.

Cette approche peut être appliquée à chacune des structures décrites précédemment.

Ce type de réalisation permet de réduire fortement les efforts d'attraction entre la partie mobile aimantée et les parties ferromagnétiques statoriques. Ces efforts sont perpendiculaires au déplacement OX et deviennent relativement faibles lorsque les parties mobiles sont bien centrées dans l'entrefer. Les pièces ferromagnétiques mobiles rajoutées peuvent aussi servir pour le guidage du ou les aimants.

La figure 17 présente une variante d'un capteur de position linéaire. L'aimant permanent (109) se déplace à l'intérieur d'un entrefer (112) défini par deux parties statoriques fixes (113, 114), à l'intérieur duquel est réalisé un entrefer (115) pour loger une sonde magnéto-sensible. L'aimant permanent (109) est partiellement encastré dans une pièce ferromagnétique mobile (116), d'épaisseur dans la direction de l'aimantation comprise entre 0.1L<e<0.9L. La pièce ferromagnétique mobile (116) sert de guidage et son épaisseur est déterminée de manière à optimiser les caractéristiques du capteur. La pièce ferromagnétique mobile (116) présente, ici, un trou pour recevoir l'aimant permanent. Il est possible de réaliser une ou plusieurs cavités dans la pièce ferromagnétique mobile, sans la trouer, pour y loger un ou plusieurs aimants permanents.

La figure 18 présente une variante du capteur de position linéaire de la figure 17, utilisant deux sondes magnéto-sensibles, dans le but de réduire la sensibilité du capteur à un champ extérieur parasite.

Ce capteur présente quatre pièces ferromagnétiques statoriques (120 à 123) définissant deux entrefers secondaires à l'intérieur desquels sont placées deux sondes magnéto-sensibles (125, 126). Deux pièces ferromagnétiques sont juxtaposées à l'aimant mobile (128, 129). L'épaisseur des pièces ferromagnétiques mobiles (128, 129) est déternimée de manière à optimiser les caractéristiques du capteur.

Lorsque le capteur est perturbé par un champ magnétique extérieur sensiblement homogène, la perturbation mesurée par les deux sondes et sensiblement identique. Une soustraction des signaux délivrés par les deux sondes permet alors de recréer un signal utile quasiment insensible au champ magnétique extérieur perturbateur. Cette structure présente alors une relativement grande insensibilité à tout champ extérieur.

## Revendications

1. - Capteur magnétique de position, comportant un stator (1) et au moins une partie mobile (2) selon au moins une direction OX, avec une course utile Xc,
Xc représentant, dans le cas d'un capteur rotatif, la largeur de l'arc angulaire parcourue par la partie mobile (2) sur le rayon moyen d'une partie aimantée et, dans le cas d'un capteur linéaire, la course de la partie mobile (2) dans une direction contenue dans le plan médian de l'entrefer principal,
le stator étant composé d'au moins deux pièces (3, 4) en matériau magnétique doux définissant au moins un entrefer secondaire (9) dans lequel est logée au moins une sonde magnéto-sensible (10) pour mesurer la variation d'induction dans cet entrefer secondaire (9), chaque partie statorique (3, 4) présentant une longueur Xs dans la direction OX au moins égale à Xc,
Xs étant mesurée sur le rayon moyen d'un aimant dans le cas d'un capteur rotatif, ou mesurée dans une direction contenue dans le plan médian de l'entrefer principal, dans le cas d'un capteur linéaire
chaque partie statorique (3, 4) étant alignée, pour un capteur linéaire soit dans une même surface plane parallèle à OX soit dans une même surface cylindrique d'axe OX, et dans une même surface cylindrique d'axe correspondant à l'axe de rotation de la partie mobile (2) pour un capteur rotatif, le capteur comportant en outre au moins une partie mobile (2) munie d'au moins une culasse ferromagnétique mobile (5) et d'au moins un aimant (8) lié à cette pièce (5), la ou les pièces mobiles magnétiques se déplaçant parallèlement aux pièces statoriques (3, 4) ferromagnétiques à une distance minimale constante, le ou les aimants (8, 28) ayant leurs pôles parallèles aux pièces ferromagnétiques du stator,
**caractérisé en ce que**,
ledit au moins un aimant (8) est de forme semi-annulaire ou rectiligne et est encastré dans une cavité située dans la culasse mobile (5), à une profondeur e telle que 0.1L < e < 0.9L, où L est l'épaisseur de l'aimant dans la direction de l'aimantation,
le ou les aimants (8, 28) se déplaçant parallèlement aux pièces ferromagnétiques statoriques à une distance minimale constante et présentant une aimantation perpendiculaire à OX et une longueur dans la direction du déplacement 0X au moins égale à Xc
Xc étant mesurée sur le rayon moyen de l'aimant (8) dans le cas d'un aimant (8) de forme semi-annulaire ou la longueur dans le cas d'un aimant rectiligne.

2. - Capteur magnétique de position selon la revendication 1 **caractérisé en ce que** le ou les aimants (8, 28) sont partiellement encastrés dans une cavité (6) d'une culasse ferromagnétique (5) mobile, du côté du stator, à une profondeur e telle que 0.1L < e < 0.9L.

3. - Capteur magnétique de position selon la revendication 1 **caractérisé en ce que** le ou les aimants (8, 28) sont juxtaposés à au moins une pièce ferromagnétique mobile d'épaisseur e, dans la direction de l'aimantation d'un aimant, telle que 0.1L < e < 0.9L, le ou les aimants présentant une longueur dans la direction du déplacement 0X au moins égale à Xc,

4. - Capteur magnétique de position selon l'une au moins des revendications 1 à 3 **caractérisé en ce que** l'organe mobile présente un aimant (8) partiellement encastré dans une cavité (6) située sensiblement au milieu de la culasse (5) ferromagnétique mobile, la cavité (6) et l'aimant (8) ayant une longueur dans la direction OX au moins égale à Xc, et de préférence égale Xc+F+2E', dans le cas d'un aimant (8) de forme semi-annulaire cette longueur est mesurée sur le rayon moyen de l'aimant (8), F est la longueur de l'entrefer selon la direction OX dans lequel est placée la sonde, E' est compris entre e/4 et E, où E est la distance mesurée perpendiculairement à OX entre les pièces statoriques (3, 4) ferromagnétiques et le fond de la cavité (6).

5. - Capteur magnétique de position selon l'une au moins des revendications 1 à 3 **caractérisé en ce que** l'organe mobile présente une culasse (5) ferromagnétique de longueur mesurée suivant OX au moins égale à 3Xc+F+6E', ou F est la longueur de l'entrefer dans la direction OX dans lequel est placé la sonde, E' est compris entre e/4 et E, où E est la distance mesurée perpendiculairement à OX, entre les pièces statoriques (3, 4) ferromagnétiques et le fond de la cavité (6).

6. - Capteur magnétique de position selon l'une au moins des revendications 1 à 3 **caractérisé en ce que** les pièces ferromagnétiques statoriques présentent une longueur Xs mesurée suivant OX sensiblement égale à Xc+2E', dans le cas d'un capteur rotatif la longueur est mesurée sur le rayon moyen d'un aimant (8), où E' est compris entre e/4 et E, où E est la distance mesurée perpendiculairement à OX entre les pièces statoriques (3, 4) ferromagnétiques et le fond de la cavité (6).

7. - Capteur magnétique de position selon l'une au moins des revendications 1 à 3 **caractérisé en ce que** la profondeur e d'une cavité (6) de la culasse (5) ferromagnétique mobile est déterminée de manière à réaliser un capteur de linéarité maximale, avec de préférence 0.3L<e < 0.8L.

8. - Capteur magnétique de position selon l'une au moins des revendications 1 à 3 **caractérisé en ce que** la cavité dans une culasse ferromagnétique mobile est réalisée de manière à obtenir un rapport e/L aussi grand que possible, avec de préférence 0.5L < e < 0.9L, en conservant une faible erreur de linéarité, de préférence inférieure à 3%.

9. - Capteur magnétique de position selon l'une au moins des revendications 1 à 3 **caractérisé en ce que** l'épaisseur e, mesurée suivant la direction de l'aimantation d'un aimant, d'une pièce ferromagnétique mobile juxtaposée à un aimant permanent est déterminée de manière à réaliser un capteur de linéarité maximale, avec de préférence 0.3L < e < 0.8L.

10. - Capteur magnétique de position selon l'une au moins des revendications 1 à 3 **caractérisé en ce que** l'épaisseur e, mesurée suivant la direction de l'aimantation d'un aimant, d'une pièce ferromagnétique mobile juxtaposée à un aimant permanent est réalisée de manière à obtenir un rapport e/L aussi grand que possible, avec de préférence 0.5L < e < 0.9L, en conservant une faible erreur de linéarité, de préférence inférieure à 3%.

11. - Capteur magnétique de position selon l'une au moins des revendications 1 à 3 **caractérisé en ce que** le rapport L/E est supérieur à 0.5 et de préférence supérieur ou égal à 0.75, où E est la distance mesurée perpendiculairement à OX entre les pièces statoriques (3, 4) ferromagnétiques et le fond de la cavité (6) où L étant l'épaisseur de l'aimant dans la direction de l'aimantation et E est la distance mesurée perpendiculairement à OX entre les pièces statoriques (3, 4) ferromagnétiques et le fond de la cavité (6).

12. - Capteur magnétique de position selon l'une au moins des revendications 1 à 3 **caractérisé en ce que** le rapport Xs/E est supérieur à 5, et de préférence supérieur ou égal à 8), où E est la distance mesurée perpendiculairement à OX entre les pièces statoriques (3, 4) ferromagnétiques et le fond de la cavité (6).

13. - Capteur magnétique de position selon l'une au moins des revendications 1 à 3 **caractérisé en ce que**, les pièces ferromagnétiques statoriques (3, 4), le ou les aimants et la ou les pièces ferromagnétiques mobiles (5) ont la même longueur Z mesurée suivant l'axe perpendiculaire à la direction de l'aimantation et à la direction déplacement OX, et de préférence supérieure ou égale à 3E, où E est la distance mesurée perpendiculairement à OX entre les pièces statoriques (3, 4) ferromagnétiques et le fond de la cavité (6).

14. - Capteur magnétique de position selon les revendications précédentes **caractérisé en ce que** les parties respectivement fixes et mobiles sont échangées en partie respectivement mobiles et fixes.

15. - Capteur magnétique de position selon l'une au moins des revendications 1 à 3 **caractérisé en ce que**, la structure statorique est composée de quatre pièces ferromagnétiques parallélépipédiques (101, 102, 103, 104) définissant deux paires d'entrefers secondaires se croisant en un point médian (100). Chaque entrefer secondaire (105, 106) étant muni d'une sonde magnéto-sensible (107, 108, 200, 201).

16. - Capteur magnétique de position selon l'une au moins des revendications 1 à 3 **caractérisé en ce que**, la partie mobile (110) peut se déplacer dans deux directions OX et OY et est composée d'une culasse ferromagnétique (111) dans laquelle est partiellement encastré un aimant permanent (109) polarisé dans la direction de l'entrefer principal, séparant les pièces statoriques de la culasse mobile.

17. - Capteur magnétique de position selon l'une au moins des revendications 1 à 3 **caractérisé en ce que**, la partie mobile peut se déplacer dans deux directions OX et OY et est composée d'un aimant permanent polarisé dans la direction de l'entrefer principal, séparant les pièces statoriques de la culasse mobile, juxtaposé à au moins une pièce ferromagnétique mobile.

## Claims

1. Magnetic position sensor, comprising a stator (1) and at least one mobile part (2) along at least one direction OX with a working stroke Xc,
Xc representing, in the case of a rotary sensor, the width of the angular arc travelled by the mobile part (2) on the mean radius of a magnetised part and, in the case of a linear sensor, the travel of the mobile part (2) in a direction contained within the median plane of the main air gap,
the stator comprising at least two parts (3, 4) made from a magnetically soft material defining at least one secondary air gap (9) in which at least one magnet-sensitive probe (10) is inserted in order to measure the induction variation in this secondary air gap (9), each stator part (3, 4) having a length Xs in the direction OX that is at least equal to Xc,
Xs being measured on the mean radius of a magnet in the case of a rotary sensor, or in a direction contained within the median plane of the main air gap in the case of a linear sensor
each stator part (3, 4) being aligned, for a linear sensor, either in the same flat surface parallel to OX or in the same cylindrical surface with OX as its axis, and for a rotary sensor, in the same cylindrical surface with its axis matching the axis of rotation of the mobile part (2) the sensor also comprising at least one mobile part (2) equipped with at least one mobile ferromagnetic yoke (5) and at least one magnet (8) linked to this part (5), the magnetic mobile part or parts moving parallel to the ferromagnetic stator parts (3, 4) at a constant minimum distance, the poles of the magnet or magnets (8, 28) being parallel to the ferromagnetic parts of the stator,
**characterised in that**,
said at least one magnet (8) has a semi-annular or rectilinear shape and is built into a cavity made in the mobile yoke (5) at a depth e so that 0.1L < e < 0.9L, where L is the thickness of the magnet in the direction of magnetisation,
the magnet or magnets (8, 28) moving parallel to the ferromagnetic stator parts at a constant minimum distance and being magnetised perpendicular to OX and having a length in the direction of movement OX at least equal to Xc
Xc being measured on the mean radius of the magnet (8) in the case of a semi-annular magnet (8) or on the length in the case of a rectilinear magnet.

2. Magnetic position sensor according to claim 1, **characterised in that** the magnet or magnets (8, 28) are partially built into a cavity (6) of a mobile ferromagnetic yoke (5) on the side of the stator, at a depth e so that 0.1L < e < 0.9L.

3. Magnetic position sensor according to claim 1, **characterised in that** the magnet or magnets (8, 28) are juxtaposed on at least one mobile ferromagnetic part with a thickness e in the direction of magnetisation of a magnet, so that 0.1L < e < 0.9L, the magnet or magnets having a length in the direction of movement OX that is at least equal to Xc.

4. Magnetic position sensor according to at least one of the claims from 1 to 3, **characterised in that** the mobile element comprises a magnet (8) partially built into a cavity (6) located approximately at the middle of the mobile ferromagnetic yoke (5), the cavity (6) and the magnet (8) having a length in the direction OX that is at least equal to Xc, and preferably equal to Xc+F+2E', in the case of a semi-annular magnet (8) this length is measured on the mean radius of the magnet (8), F is the length of the air gap according to the direction OX in which the probe is placed, E' is comprised between e/4 and E, where E is the distance measured perpendicular to OX between the ferromagnetic stator parts (3, 4) and the bottom of the cavity (6).

5. Magnetic position sensor according to at least one of the claims from 1 to 3, **characterised in that** the mobile element has a ferromagnetic yoke (5) with a length measured according to OX that is at least equal to 3Xc+F+6E', where F is the length of the air gap in the direction OX in which the probe is placed, E' is comprised between e/4 and E, where E is the distance measured perpendicular to OX, between the ferromagnetic stator parts (3, 4) and the bottom of the cavity (6).

6. Magnetic position sensor according to at least one of the claims from 1 to 3, **characterised in that** the ferromagnetic stator parts have a length Xs measured according to OX that is approximately equal to Xc+2E', in the case of a rotary sensor the length is measured on the mean radius of a magnet (8), where E' is comprised between e/4 and E, where E is the distance measured perpendicular to OX, between the ferromagnetic stator parts (3, 4) and the bottom of the cavity (6).

7. Magnetic position sensor according to at least one of the claims from 1 to 3, **characterised in that** the depth e of a cavity (6) of the mobile ferromagnetic yoke (5) is determined such as to create a sensor with maximum linearity, preferably in which 0.3L < e < 0.8L.

8. Magnetic position sensor according to at least one of the claims from 1 to 3, **characterised in that** the cavity in a mobile ferromagnetic yoke is made such as to obtain as high a ratio of e:L as possible, preferably in which 0.5L < e < 0.9L, while ensuring a low degree of linearity error, preferably less than 3%.

9. Magnetic position sensor according to at least one of the claims from 1 to 3, **characterised in that** the thickness e, measured according to the direction of magnetisation of a magnet, of a mobile ferromagnetic part juxtaposed on a permanent magnet is determined so as to achieve a sensor with maximum linearity, preferably in which 0.3L < e < 0.8L.

10. Magnetic position sensor according to at least one of the claims from 1 to 3, **characterised in that** the thickness e measured according to the direction of magnetisation of a magnet, of a mobile ferromagnetic part juxtaposed on a permanent magnet is determined so as to achieve as high a ratio of e:L as possible, preferably in which 0.5L < e < 0.9L, while ensuring a low degree of linearity error, preferably less than 3%.

11. Magnetic position sensor according to at least one of the claims from 1 to 3, **characterised in that** the ratio of L:E is higher than 0.5 and preferably higher than or equal to 0.75, where E is the distance measured perpendicular to OX between the ferromagnetic stator parts (3, 4) and the bottom of the cavity (6), where L is the thickness of the magnet in the direction of magnetisation and E is the distance measured perpendicular to OX between the ferromagnetic stator parts (3, 4) and the bottom of the cavity (6).

12. Magnetic position sensor according to at least one of the claims from 1 to 3, **characterised in that** the ratio of Xs:E is higher than 5, and preferably higher than or equal to 8, where E is the distance measured perpendicular to OX between the ferromagnetic stator parts (3, 4) and the bottom of the cavity (6).

13. Magnetic position sensor according to at least one of the claims from 1 to 3, **characterised in that** the ferromagnetic stator parts (3, 4), the magnet or magnets and the mobile ferromagnetic parts (5) have the same length z measured according to the axis that is perpendicular to the direction of magnetisation and to the direction of movement OX, and preferably larger than or equal to 3E, where E is the distance measured perpendicular to OX between the ferromagnetic stator parts (3, 4) and the bottom of the cavity (6).

14. Magnetic position sensor according to the preceding claims, **characterised in that** the respectively fixed and mobile parts change to respectively mobile and fixed parts.

15. Magnetic position sensor according to at least one of the claims from 1 to 3, **characterised in that** the stator structure is made up of four paralellepipedal ferromagnetic parts (101, 102, 103, 104) defining two pairs of secondary air gaps that cross at a median point (100), each secondary air gap (105, 106) being equipped with a magnet-sensitive probe (107, 108, 200, 201).

16. Magnetic position sensor according to at least one of the claims from 1 to 3, **characterised in that** the mobile part (110) is capable of moving in two directions OX and OY and consists of a ferromagnetic yoke (111) with a partially built-in permanent magnet (109), polarised in the direction of the main air gap separating the stator parts from the mobile yoke.

17. Magnetic position sensor according to at least one of the claims from 1 to 3, **characterised in that** the mobile part is capable of moving in two directions OX and OY and consists of a permanent magnet, polarised in the direction of the main air gap separating the stator parts from the mobile yoke, juxtaposed on at least one mobile ferromagnetic part.

## Patentansprüche

1. - Magnetischer Positionsgeber, der einen Stator (1) und mindestens einen beweglichen Teil (2) nach mindestens einer Richtung OX mit einem Nutzhub Xc umfaßt,
wobei Xc im Fall eines Drehgebers die Breite des vom beweglichen Teil (2) auf dem durchschnittlichen Radius eines magnetischen Teils durchlaufenen Winkelbogens darstellt, und im Fall eines linearen Gebers den Hub des beweglichen Teils (2) in einer Richtung, die in der Mittelebene des Hauptspalts enthalten ist,
wobei der Stator aus mindestens zwei Teilen (3, 4) aus weichem magnetischem Material besteht, das mindestens einen sekundären Spalt (9) beschreibt, in dem mindestens eine magnetisch beeinflußbare Sonde (10) für die Messung der Induktionsveränderung in diesem sekundären Spalt (9) untergebracht ist, wobei jeder Statorteil (3, 4) eine Länge Xs in der Richtung OX aufweist, die mindestens gleich Xc ist,
wobei Xs im Fall eines Drehgebers auf dem durchschnittlichen Radius eines Magneten gemessen wird, oder im Fall eines linearen Gebers in einer Richtung, die in der Mittelebene des Hauptspalts enthalten ist,
wobei jeder Statorteil (3, 4) bei einem linearen Geber entweder auf einer gleichen ebenen parallel zu OX stehenden Oberfläche oder auf einer gleichen zylindrischen Oberfläche mit OX Achse gefluchtet ist, oder bei einem Drehgeber auf einer gleichen zylindrischen Oberfläche mit einer Achse, die der Drehachse des beweglichen Teils (2) entspricht, wobei der Geber außerdem mindestens einen beweglichen Teil (2) umfaßt, der mit mindestens einem beweglichen ferromagnetischen Joch (5) und mit mindestens einem mit diesem Teil (5) verbundenen Magneten (8) versehen ist, wobei sich das oder die beweglichen magnetischen Teile parallel zu den ferromagnetischen Statorteilen (3, 4) in einem konstanten Mindestabstand bewegen, wobei der oder die Magneten (8, 28) ihre Pole parallel zu den ferromagnetischen Teilen des Stators haben,
**dadurch gekennzeichnet, daß**
der besagte mindestens eine Magnet (8) halbringförmig oder geradlinig und in eine Ausnehmung eingebaut ist, die sich im beweglichen Joch (5) befindet, und zwar in einer solchen Tiefe e, daß 0.1L < e < 0.9L, wobei L die Dicke des Magneten in der Richtung der Magnetisierung ist,
sich der oder die Magnete (8, 28) parallel zu den ferromagnetischen Statorteilen in einem konstanten Mindestabstand bewegen und eine senkrecht zu OX verlaufende Magnetisierung aufweisen und eine Länge in der Richtung der Bewegung OX, die mindestens gleich Xc ist,
wobei Xc auf dem durchschnittlichen Radius des Magneten (8) gemessen wird, wenn es sich um einen halbringförmigen Magneten (8) handelt, oder die Länge im Fall eines geradlinigen Magneten.

2. - Magnetischer Positionsgeber nach Anspruch 1, **dadurch gekennzeichnet, daß** der oder die Magnete (8, 28) teilweise in eine Ausnehmung (6) eines beweglichen ferromagnetischen Jochs (5) statorseitig eingebaut sind, und zwar in einer solchen Tiefe e, daß 0.1L < e < 0.9L.

3. - Magnetischer Positionsgeber nach Anspruch 1, **dadurch gekennzeichnet, daß** der oder die Magnete (8, 28) mit mindestens einem beweglichen ferromagnetischen Teil mit Dicke e in der Richtung der Magnetisierung eines Magneten verbunden sind, wie 0.1L < e < 0.9L, wobei der oder die Magnete eine Länge in der Bewegungsrichtung OX von mindestens gleich Xc aufweisen.

4. - Magnetischer Positionsgeber nach mindestens einem der vorstehenden Ansprüche 1 bis 3, **dadurch gekennzeichnet, daß** das bewegliche Organ einen Magneten (8) aufweist, der teilweise in eine Ausnehmung (6) eingebaut ist, die sich deutlich in der Mitte des beweglichen ferromagnetischen Jochs (5) befindet, wobei die Ausnehmung (6) und der Magnet (8) eine Länge in der Richtung OX aufweisen, die mindestens gleich Xc ist und vorzugsweise gleich Xc+F+2E', wobei im Fall eines halbringförmigen Magneten (8) diese Länge auf dem durchschnittlichen Radius des Magneten (8) gemessen wird, wobei F die Länge des Spalts gemäß der Länge OX ist, in dem die Sonde plaziert ist, E' ist inbegriffen zwischen e/4 und E, wo E der Abstand ist, der senkrecht zu OX zwischen den ferromagnetischen Statorteilen (3, 4) und dem Boden der Ausnehmung (6) gemessen wird.

5. - Magnetischer Positionsgeber nach mindestens einem der vorstehenden Ansprüche 1 bis 3, **dadurch gekennzeichnet, daß** das bewegliche Organ ein ferromagnetisches Joch (5) mit einer gemäß OX gemessenen Länge mindestens gleich 3Xc+F+6E' aufweist, wobei F die Länge des Spalts in der Richtung OX ist, in der die Sonde plaziert ist, E' ist inbegriffen zwischen e/4 und E, wo E der Abstand ist, der senkrecht zu OX zwischen den ferromagnetischen Statorteilen (3, 4) und dem Boden der Ausnehmung (6) gemessen wird.

6. - Magnetischer Positionsgeber nach mindestens einem der vorstehenden Ansprüche 1 bis 3, **dadurch gekennzeichnet, daß** die ferromagnetischen Statorteile eine gemäß OX gemessene Länge deutlich gleich Xc+2E' aufweisen, wobei im Fall eines Drehgebers die Länge auf dem durchschnittlichen Radius eines Magneten (8) gemessen wird, wobei E' inbegriffen ist zwischen e/4 und E, wo E der Abstand ist, der senkrecht zu OX zwischen den ferromagnetischen Statorteilen (3, 4) und dem Boden der Ausnehmung (6) gemessen wird.

7. - Magnetischer Positionsgeber nach mindestens einem der vorstehenden Ansprüche 1 bis 3, **dadurch gekennzeichnet, daß** die Tiefe e einer Ausnehmung (6) des beweglichen ferromagnetischen Jochs (5) so bestimmt wird, daß ein Geber mit maximaler Linearität mit bevorzugt 0.3L < e < 0.8L realisiert wird.

8. - Magnetischer Positionsgeber nach mindestens einem der vorstehenden Ansprüche 1 bis 3, **dadurch gekennzeichnet, daß** die Ausnehmung in einem beweglichen ferromagnetischen Joch so realisiert wird, daß ein möglichst großes Verhältnis e/L erzielt wird mit bevorzugt 0.5L < e < 0.9L, unter Beibehaltung eines geringen Linearitätsfehlers, bevorzugt unter 3%.

9. - Magnetischer Positionsgeber nach mindestens einem der vorstehenden Ansprüche 1 bis 3, **dadurch gekennzeichnet, daß** die nach der Richtung der Magnetisierung eines Magneten gemessene Dicke e eines beweglichen ferromagnetischen mit einem Permanentmagneten verbundenen Teils so bestimmt wird, daß ein Geber mit maximaler Linearität, bevorzugt 0.3L < e < 0.8L, realisiert wird.

10. - Magnetischer Positionsgeber nach mindestens einem der vorstehenden Ansprüche 1 bis 3, **dadurch gekennzeichnet, daß** die nach der Richtung der Magnetisierung eines Magneten gemessene Dicke e eines beweglichen ferromagnetischen mit einem Permanentmagneten verbundenen Teils so realisiert wird, daß ein möglichst großes Verhältnis e/L, mit bevorzugt 0.5L < e < 0.9L, realisiert wird, unter Beibehaltung eines geringen Linearitätsfehlers, bevorzugt unter 3%.

11. - Magnetischer Positionsgeber nach mindestens einem der vorstehenden Ansprüche 1 bis 3, **dadurch gekennzeichnet, daß** das Verhältnis L/E größer als 0.5 und bevorzugt größer oder gleich 0.75 ist, wo E der senkrecht zu OX zwischen den ferromagnetischen Statorteilen (3, 4) und dem Boden der Ausnehmung (6) gemessene Abstand ist, wo L die Dicke des Magneten in der Richtung der Magnetisierung ist und E der senkrecht zu OX zwischen den ferromagnetischen Statorteilen (3, 4) und dem Boden der Ausnehmung (6) gemessene Abstand ist.¹

12. - Magnetischer Positionsgeber nach mindestens einem der vorstehenden Ansprüche 1 bis 3, **dadurch gekennzeichnet, daß** das Verhältnis Xs/E größer als 5 und bevorzugt größer oder gleich 8 ist, wo E der senkrecht zu OX zwischen den ferromagnetischen Statorteilen (3, 4) und dem Boden der Ausnehmung (6) gemessene Abstand ist.

13. - Magnetischer Positionsgeber nach mindestens einem der vorstehenden Ansprüche 1 bis 3, **dadurch gekennzeichnet, daß** die ferromagnetischen Statorteile (3, 4), der oder die Magnete und der oder die beweglichen ferromagnetischen Teile (5) die gleiche Länge Z haben, die nach der senkrecht zur Richtung der Magnetisierung und der Bewegungsrichtung OX stehenden Achse gemessen wird, und bevorzugt größer oder gleich 3E ist, wo E der senkrecht zu OX zwischen den ferromagnetischen Statorteilen (3, 4) und dem Boden der Ausnehmung (6) gemessene Abstand ist.

14. - Magnetischer Positionsgeber nach den vorstehenden Ansprüchen, **dadurch gekennzeichnet, daß** die fixen beziehungsweise beweglichen Teile in bewegliche beziehungsweise fixe Teile umgetauscht werden.

15. - Magnetischer Positionsgeber nach mindestens einem der vorstehenden Ansprüche 1 bis 3, **dadurch gekennzeichnet, daß** die Statorstruktur aus vier quaderförmigen ferromagnetischen Teilen (101, 102, 103, 104) besteht, die zwei Paare sekundäre Spalte beschreiben, die sich in einem Mittelpunkt (100) kreuzen. Jeder sekundäre Spalt (105, 106) ist dabei mit einer magnetisch beeinflußbaren Sonde (107, 108, 200, 201) versehen.

16. - Magnetischer Positionsgeber nach mindestens einem der vorstehenden Ansprüche 1 bis 3, **dadurch gekennzeichnet, daß** sich der bewegliche Teil (110) in zwei Richtungen OX und OY bewegen kann und aus einem ferromagnetischen Joch (111) besteht, in dem ein Permanentmagnet (109) teilweise eingebaut ist, der in der Richtung des Hauptspalts polarisiert ist, der die Statorteile vom beweglichen Joch trennt.

17. - Magnetischer Positionsgeber nach mindestens einem der vorstehenden Ansprüche 1 bis 3, **dadurch gekennzeichnet, daß** sich der bewegliche Teil in zwei Richtungen OX und OY bewegen kann und aus einem Permanentmagneten besteht, der in der Richtung des Hauptspalts polarisiert ist, der die Statorteile vom beweglichen Joch trennt, und der mit mindestens einem beweglichen ferromagnetischen Teil verbunden ist.
